# EUROPEAN PATENT SPECIFICATION

(11) **EP 4 642 832 B1**
(45) Date of publication and mention of the grant of the patent: **20.05.2026**
(21) Application number: 23841203.5
(22) Date of filing: 22.12.2023
(51) Int. Cl.: C08G 65/336, C08G 77/38, C08G 77/46, C08G 81/02

(54) **POLYMERSOMES COMPRISING CLEAVABLE BLOCK COPOLYMERS**
POLYMERSOME MIT SPALTBAREN BLOCKCOPOLYMEREN
POLYMERSOMES COMPRENANT DES COPOLYMÈRES SÉQUENCÉS CLIVABLES

(30) Priority: 31.12.2022 DK PA202270660
(43) Date of publication of application: 05.11.2025
(73) Proprietor: Aquaporin A/S, 2800 Kongens Lyngby (DK); Danmarks Tekniske Universitet, 2800 Kongens Lyngby (DK)
(72) Inventor: NORINKEVICIUS, Karolis, 2800 Kgs. Lyngby (DK); DAUGAARD, Anders Egede, 2880 Bagsværd (DK); REGUEIRA, Torsten Høybye Bak, 3500 Værløse (DK); MADSEN, Peter Jeppe, 2900 Hellerup (DK)
(74) Representative: Nordic Patent Service A/S
(86) International application number: PCT/EP2023/087673
(87) International publication number: WO 2024/141492

(56) References cited:
- AKIMOTO T ET AL: "Polymeric percutaneous drug penetration enhancer - Synthesis and enhancing property of PEG/PDMS block copolymer with a cationic end group", JOURNAL OF CONTROLLED RELEASE, ELSEVIER, AMSTERDAM, NL, vol. 49, no. 2-3, 15 December 1997 (1997-12-15), pages 229 - 241, XP004101949, ISSN: 0168-3659, DOI: 10.1016/S0168-3659(97)00092-8
- KONG ZHINENG ET AL: "A simple, efficient and metal-free route to amphiphilic triblock copolymers containing PDMS and PEG segments: synthesis, characterization and self-assembly in aqueous media", JOURNAL OF POLYMER RESEARCH, SPRINGER NETHERLANDS, DORDRECHT, vol. 23, no. 12, 21 November 2016 (2016-11-21), pages 1 - 8, XP036118093, ISSN: 1022-9760, [retrieved on 20161121], DOI: 10.1007/S10965-016-1122-2
- BURCU KEKEVI ET AL: "Synthesis and Characterization of Silicone-Based Surfactants as Anti-Foaming Agents", JOURNAL OF SURFACTANTS AND DETERGENTS, SPRINGER/OACS, USA, vol. 15, no. 1, 7 July 2011 (2011-07-07), pages 73 - 81, XP019994622, ISSN: 1558-9293, DOI: 10.1007/S11743-011-1277-0

## Description

### TECHNICAL FIELD

The disclosure relates to polymersomes comprising auto-cleavable block copolymers, methods of making the same and semi-permeable separation membranes comprising the same.

### BACKGROUND

Amphiphilic block copolymer materials can be used for forming a wide range of self-assemblies, such as micelles, vesicles, or rods both in organic solvents and in aqueous media. Applications range from encapsulation of drugs or vitamins for stabilization and/or delivery to serving as templates for nanometer scale patterning. Systems based on diblock or triblock copolymers are well known and useful due to their ability to form polymersome structures. Typically, a ring-opening polymerization reaction of a hydrophobic cyclic monomer is utilized, such as that of ε-caprolactone or cyclosiloxane), where the growth of the monomer chain is promoted by an initiator such as a poly(ethylene glycol) methyl ether macroinitiator in the presence of a catalyst. Subsequent addition of a hydrophilic polymer moiety allows to obtain triblock copolymers. Shuai et al. 2004 explores the synthesis of diblock copolymers of poly(ε-caprolactone) (PCL) and monomethoxy poly(ethylene glycol) (mPEG) with various compositions. In Guo et al., 2009, mPEG-PCL diblock copolymer that self-assemble into monodisperse micelles are synthesized. More recently, Zhang et al., 2012, synthesize PEG-g-PCL diblock copolymers by an alternative "graft onto" method that self-assemble into micelle-like aggregates in aqueous solution with diverse diameters. AKIMOTO T ET AL,JOURNAL OF CONTROLLED RELEASE, ELSEVIER, , vol. 49, no. 2-3, (1997-12-15), discloses the synthesis of an amphiphilic PEG-b-PDMS-b-PEG triblock copolymers capable of self-assembly.

The use of amphiphilic lipids and block copolymers for forming self-assembled vesicles having bilayer or bilayer-like structures is well known in the art, in particular for immobilizing amphiphilic membrane proteins, such as aquaporin water channels (AQPs). Vesicles comprising AQPs can then be used to make semi permeable membranes having immobilized AQPs for applications such as the purification of water (WO2006/122566) or the generation of salinity power (WO2007/033675), in general by depositing the vesicles as a layer or in a film on a supporting substrate, which allows the selective passage of water molecules through the membranes by nanofiltration, reverse osmosis, forward osmosis or pressure retarded osmosis.

WO2013/043118 discloses thin film composite (TFC) membranes in which aquaporin water channels (AQPs) are incorporated in the active layer of the membrane. In addition, it discloses a method of producing thin film composite membranes and their uses in filtration processes, such as nanofiltration and osmotic filtration processes. The TFC membranes comprise lipid-AQP/copolymer-AQP vesicles that are incorporated in the TFC active layer. WO2010/146365 describes preparation of TFC-aquaporin-Z (AqpZ) filtration membranes that use an amphiphile triblock copolymer as a vesicle forming substance for incorporating immobilized AQPs. WO2014/108827 discloses a hollow fiber (HF) module having fibers modified with a thin film composite (TFC) layer comprising aquaporin water channels in which the aquaporin water channels are incorporated in vesicles before incorporation into the TFC layer.

The simplest way to prepare polymersomes in a research laboratory is the thin-film hydration method followed by extrusion. This method involves making a thin polymer film in a round-bottom flask by the removal by, e.g., vacuum drying of organic solvent, such as chloroform. Upon the addition and agitation of a dispersion medium, such as water, heterogeneous polymersomes are formed. Finally, after extrusion through, e.g., polycarbonate membranes, more homogeneous polymersomes are obtained. This method, however, is not very efficient and not particularly scalable. Thus, a major challenge in vesicle based transmembrane protein delivery to filtration membranes is vesicle formation efficiency. None of the abovementioned disclosures shed light on efficiency of block copolymers to form vesicles/polymersomes or on the effect of block copolymer synthesis route on said vesicle formation.

### SUMMARY

It is therefore an object to provide a method of vesicle formation with greater efficiency via obtaining a greater ratio of vesicle to non-desirable structures, such as worm structures and rods. It is another object to provide a method for obtaining an end-functionalized block copolymer suitable for vesicle formation. It is another object to provide a method for obtaining end-functionalized block copolymer suitable for cross-linking. It is another object to provide a method for obtaining vesicles with similar size.

The foregoing and other objects are achieved by the features of the independent claims. Further implementation forms are apparent from the dependent claims, the description, and the figures.

According to a first aspect, there is provided a method for making a liquid composition comprising self-assembled polymersomes in a aqueous solution, wherein said polymersomes comprise amphiphilic diblock copolymers of the P₁-b-P₂ type, said method comprising the step of synthesizing R-C-O-P₁-b-P₂ block copolymers comprising a silyl ether (-C-O-Si-) bond and wherein P₁ is a hydrophobic polymer and P₂ is a hydrophilic polymer and R is any atom or group of atoms, wherein said synthesis comprises ring-opening polymerization of a cyclic monomer by an initiator in the presence of a catalyst, the initiator comprising a carbon-bound hydroxyl.

In one possible implementation form of the first aspect the cyclic monomer is a cyclic siloxane and by using a carbon-bound hydroxyl terminated initiator, the ring opening polymerization reaction advantageously produces a block polymer comprising a silyl ether (-C-O-Si) bond, i.e., a bond where an oxygen atom is bound to silicone and carbon atoms, where said bond is labile in an aqueous environment. Thus, said bond will hydrolyze over time when exposed to water, and the leaving group will advantageously be separated from the block polymer. With this bond being comprised between a diblock copolymer of the P1-b-P2 type and a third group of atoms R, R will be shed by the cleavage, advantageously resulting in a diblock copolymer and a free group R.

In a possible implementation form of the first aspect the diblock copolymer includes a hydrophilic moiety and a hydrophobic moiety. Thus, after cleavage, an amphiphilic diblock copolymer results, which may be advantageous for synthesizing polymersomes. This method of producing diblock copolymers is much more efficient and scalable when compared to the traditional film rehydration method of polymersome synthesis. Without wanting to be bound by any theory, it is believed that the concentration polymerization that is created at the interface between the dehydrated film on the surface of a round-bottom flask and the newly added dispersion media greatly hinders obtaining a homogeneous solution favoring the yield of polymersomes. Thus, with this traditional method, a greater number of alternative and less desirable structures such as rods, micelles and worm-like structures is obtained. Thereby, the present method avoids these unproductive synthesis conditions and advantageously yields a much greater number of homogenously sized polymersomes.

Further, by the initiator being hydroxy terminated, many initiators may be used, thus resulting in a large number of possible R groups bound to the P₁-b-P₂ block copolymer and in a conformation (R-C-O-P₁-b-P₂) for leaving the copolymer via spontaneous hydrolysis of the silyl ether bond in the presence of water. Thus, such a molecule may be advantageously considered for use in a variety of applications, such as drug delivery.

In a possible implementation form of the first aspect the cyclic monomer is a cyclic trisiloxane.

In a possible implementation form of the first aspect, R is a hydrophilic polymer. By shedding a hydrophilic moiety R, the f value, i.e., the hydrophilic fraction comprised in a copolymer in relation to the total Mn of the polymer chain, will decrease. This leads to the change in critical packing parameter and thus curvature of the self-assembly, driving the block copolymer chains to reassemble from worm-like structures to vesicles. Thus, the presence of a labile silyl ether bond in the copolymer advantageously favors the efficient formation of diblock copolymer vesicles/polymersomes over the formation of other structures, such as rods, micelles and/or worm like structures.

In a possible implementation form of the first aspect, the vesicles also include triblock copolymer. Said triblock copolymer may be copolymer that has not undergone cleavage. The presence of triblock copolymer in a diblock copolymer-based vesicle may advantageously enable better integration of an amphiphilic transmembrane protein within the vesicle membrane.

In a possible implementation form of the first aspect, the product of the ring-opening polymerization reaction is a polymer of the R-C-O-P₁ type, and the method further comprises the steps of
- reacting the R-C-O-P₁ polymer with a chloro silane for obtaining a silane-terminated R-C-O-P₁-Si-H, and
- reacting the silane-terminated polymer of the previous step with a vinyl-terminated hydrophilic polymer (P₂) for obtaining a block copolymer of the R-C-O-P₁-b-P₂ type comprising a silyl ether (-C-O-Si-) bond. By end capping, the polymer is advantageously provided with a reactive end group in preparation for adjoining to a second polymer, P₂.

In a possible implementation form of the first aspect, wherein the product of the ring-opening polymerization reaction is a polymer of the R-P₁-OH type, the method may further comprise the steps of
- reacting the R-P₁-OH polymer with a chloro silane for obtaining a silane-terminated R-P₁-C-O-Si-H, and
- reacting the silane-terminated polymer of the previous step with a vinyl-terminated hydrophilic polymer (P₂) for obtaining a block copolymer of the R-b-P₁-C-O-Si-P₂ type comprising a silyl ether (-C-O-Si-) bond.

In a further possible implementation form of the first aspect, the chloro silane is chlorodimethyl silane.

In a further possible implementation form of the first aspect, the initiator has a Mn comprised between approximately 200 Da and 5 kDa.

In a further possible implementation form of the first aspect, the initiator has a Mn comprised between approximately 200 Da and 2 kDa.

In another possible implementation form of the first aspect, the initiator has a Mn comprised between approximately 600 Da and 900 Da.

In a further possible implementation form of the first aspect, the initiator comprises a hydroxy-terminated polymer, such as poly(ethylene glycol) (PEG).

In a further possible implementation form of the first aspect, the initiator comprises a hydroxy-terminated alcohol.

In another possible implementation form of the first aspect, the initiator comprises poly(ethylene glycol) (PEG) and PEG-O-P₁-b-P₂ is synthesized.

In another possible implementation form of the first aspect, the initiator comprises methoxy-PEG (MeO-PEG-OH) and MeO-PEG-O-P₁-b-P₂ is synthesized.

In a possible implementation form of the first aspect, P₁ is poly(dimethyl siloxane) (PDMS) and the amphiphilic diblock copolymer is of the poly(dimethyl siloxane)-b-P₂ (H-PDMS-b-P₂) type, and the method comprises the step of synthesizing R-C-O-(Si(CH₃)2-O)n-P₂ (R-C-O-PDMS-b-P₂) block copolymers comprising a silyl ether (-C-O-Si-) bond.

In a possible implementation form of the first aspect, P₁ is polycaprolactone (PCL) and the amphiphilic diblock copolymer is of the polycaprolactone-b-P₂ (H-Si-PCL-b-P₂) or H-Si-poly(caprolactone)-b-P₃ types, and the method further comprises the step of synthesizing P₂-PCL-C-O-Si-O-PCL-b-P₃ triblock copolymers comprising at least two silyl ether (-CO-Si-) bonds, wherein P₂ and/or P₃ are hydrophilic polymers. Also, P₂ = P₃ or P₂ ≠ P₃.

In a possible implementation form of the first aspect, a coupling agent may be added to the reaction. By continuing the reaction in the presence of a coupling agent, triblock copolymers of the P₂-PCL-C-O-Si-PCL-b-P₃ type, wherein P₂ and P₃ are hydrophilic polymers may be advantageously obtained. The coupling agent, which may be covalently linked to a block polymer-b-PCL diblock copolymer on each end, may advantageously comprise at least one silyl ether (-C-O-Si-) bond.

In a further possible implementation form of the first aspect, the coupling agent may be dichloro silane and triblock copolymers of the P₂-b-PCL-C-O-Si-O-PCL-b-P₃ type are obtained. Also, P₂ = P₃ or P₂ ≠ P₃ and P₂ and/or P₃ may, further, be methoxy or vinyl terminated.

In a possible implementation form of the first aspect, the reaction is run until an amount of self-assembled polymersomes are measurable in the aqueous solution, such as by measurement with a Cryo-TEM instrument, said polymersomes comprising amphiphilic diblock copolymers of the P₁-b-P₂ type.

In a further possible implementation form of the first aspect, a crosslinking reagent is further added to the reaction.

In a further possible implementation form of the first aspect, P₂ is reacted with a thiol of the form HS-R, wherein R comprises a functional group for obtaining a functionalized diblock or triblock copolymer via thiol-ene reaction. In a further possible implementation form of the first aspect, HS-R bears at least one of the following functionalities: Amine, acid, alcohol, protein, peptide, or ester. In a possible implementation form of the first aspect the thiol-ene reaction is initiated by either one of photoinitiation, thermal initiation or electrochemical initiation, amongst others.

In a possible implementation form of the first aspect, one or more of P₂, P₃, the diblock copolymer or the triblock copolymer to be functionalized via thiol-ene reaction comprises a vinyl terminal group. In a possible implementation form of the first aspect, a triblock copolymer of the P₂-b-PCL-C-O-Si-PCL-b-P₃ type is functionalized via thiol-ene reaction to functional end groups of different species.

In a further implementation form of the first aspect, the HS-R thiol comprises at least two thiols of the form HS-R₁ and HS-R₂ for obtaining a mix of R-C-O-P₁-b-P₂ diblock or triblock copolymers.

In a further possible implementation form of the first aspect, the copolymer is amine functionalized by one or more of R, P₂ and/or P₃ being reacted with a thiol of the form HS-R₁, wherein R₁ comprises an amine. According to this reaction, a R-C-OP₁-b-P₂-NH₂ diblock or triblock copolymer (where R is a polymer) or a NH₂-P₂-b-PCL-C-O-Si-PCL-b-P₃-NH₂, P₂-b-PCL-C-O-Si-PCL-b-P₃-NH₂ or NH₂-P₂-b-PCL-C-O-Si-PCL-b-P₃ triblock copolymer may be advantageously obtained.

In a further possible implementation form of the first aspect, the copolymer is amine functionalized by one or more of R, P₂ and/or P₃ being reacted with a thiol of the form HS-R₁, wherein R₁ comprises an amine. According to this reaction, a R-C-OP₁-b-P₂-NH₂ diblock or triblock copolymer (where R is a polymer) or a NH₂-P₂-b-PCL-C-O-Si-O-C-PCL-b-P₃-NH₂, P₂-b-PCL-CO-Si-O-C-PCL-b-P₃-NH₂ or NH₂-P₂-b-PCL-C-O-Si-O-C-PCL-b-P₃ triblock copolymer may be advantageously obtained.

In a possible implementation form of the first aspect, the liquid composition comprises between 1% - 20% NH₂- di or triblock amine functionalized copolymers in relation to total copolymer content. In a further possible implementation form of the first aspect, the liquid composition comprises between 2% - 5% NH₂- diblock and/or triblock amine functionalized copolymers in relation to total copolymer content. Without wanting to be bound by any theory, it is thought that these percent ranges allow for an optimal density of amine end groups on the surface of the vesicles without the said density disrupting the vesicle stability to the point of rupture. It is further currently believed that an excessive density of positive charges of the amine-functionalized copolymers on inner and outer surfaces may lead to vesicle rupture via charge repulsion. A maximized positive charge density on the outer surface of the vesicle membranes may advantageously optimize the available functional groups for further interaction, e.g., via positive electrostatic charge interaction with a negatively charged element on a separation membrane.

In a possible implementation form of the first aspect, a solubilized transmembrane protein is added to the liquid composition. Copolymers may interact via the end functional groups with the amino acid residues of the transmembrane protein. Thus, in the case of copolymer interaction with amino acid residues of the transmembrane protein, amino acid negative charge may be established under certain conditions (pH, pKs etc.) used to produce the liquid composition and/or the membranes comprising the polymersomes.

In a possible implementation form of the first aspect, the method further comprises steps for producing a thin film composite (TFC) separation membrane, the method comprising the step of applying the liquid composition to a porous support membrane.

In a possible implementation form of the first aspect, the method comprises producing the TFC membrane by interfacial polymerization.

In a possible implementation form of the first aspect, the catalyst used in the method is a 1,3-trimethylene-2-propylguanidine (TMnPG). By the ROP reaction being catalyzed by a TMnPG may advantageously allow to produce block copolymers with narrow polydispersities, which in turn may lead to positive effects on obtaining a greater vesicle to non-desirable structures such as rods, micelles and/or worm like structures.

In a further possible implementation form of the first aspect, MeOH and NaOMe are used in the TMnPG synthesis and the ratio between the MeOH and NaOMe is at least 7:1. When using this or a greater ratio, a purer product may be obtained.

According to a second aspect, there is provided a polymersome comprising block copolymers of the H-Si-P₁-b-P₂ type wherein P₁ is a hydrophobic polymer and P₂ is a hydrophilic polymer.

In a possible implementation form of the second aspect the polymersome comprises block copolymers of the R-C-O-Si-P₁-b-P₂ type comprising a silyl ether (-C-O-Si-) bond and wherein R is any atom or group of atoms.

In a possible implementation form of the second aspect the block copolymer comprising a silyl ether bond is a triblock copolymer.

In a possible implementation form of the second aspect P₂ and/or P₃ comprise PEG.

In a possible implementation form of the second aspect P₂ and/or R comprise PEG.

In a possible implementation form of the second aspect P₂ P₃ and/or R comprise PEG.

In a possible implementation form of the second aspect P₁ comprises poly(dimethylsiloxane) (PDMS) or polycaprolactone (PCL).

In a possible implementation form of the second aspect the triblock copolymer comprising a silyl ether bond is of the PEG-O-PDMS-b-PEG, MeO-PEG-O-PDMS-PEG or PEG-PCL-C-O-Si-PCL-PEG types.

In a possible implementation form of the second aspect the the block copolymer further comprises a functional end group allowing crosslinking, such as one selected from the group comprising primary amines (-NH2), carboxyls (-COOH), sulfhydryls (-SH) and carbonyls (-CHO).

In a possible implementation form of the second aspect the polymersome further comprises a transmembrane protein in the membrane of the self-assembled polymersome.

According to a third aspect, there is provided a separation membrane comprising the polymersome according to the present disclosure.

These and other aspects will be apparent from the example(s) and embodiment(s) described below.

### BRIEF DESCRIPTION OF THE DRAWINGS

In the following detailed portion of the present disclosure, the aspects, embodiments, and implementations will be explained in more detail with reference to the example embodiments shown in the drawings, in which:
Fig. 1 represents the ring opening polymerization (ROP) of hexamethylcyclotrisiloxane by PEG and synthesis of PEG-O-PDMS diblock copolymer in the presence of 1,2-trimethylene-3-propylguanidine (TMmPG) as catalyst.
Fig. 2 represents the ring opening polymerization (ROP) of hexamethylcyclotrisiloxane by lower alcohols and synthesis of R-O-PDMS polymers in the presence of TMmPG as catalyst.
Fig. 3 represents end-capping of PEG-O-PDMS with chlorodimethylsilane.
Fig. 4 represents addition of MeO-PEG to a chlorodimethylsilane terminated PEG-O-PDMS.
Fig. 5 represents the synthesis of cleavable mPEG-b-PCL-b-mPEG triblock copolymer.
Fig. 6 is a plot of mPEG-PDMS exposure to aqueous media over time.

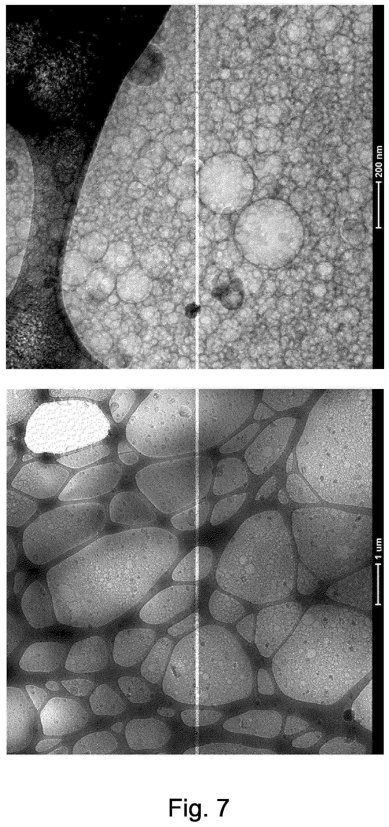

Fig. 7 shows Cryo-TEM images of mPEG-PDMS diblock and triblock vesicles solutions after cleavage.
Fig. 8 is a plot showing time-series measurements of ring opening of D3 in a ¹H NMR kinetic study showing accumulation of PDMS in detriment of an mPEG as initiator.
Fig. 9 is a plot showing conversion of D3 over time using mPEG as initiator and assuming full initiation efficiency.
Fig. 10 are plots showing growth of the Mn of PDMS over time in non-purified (A) and purified samples (B)

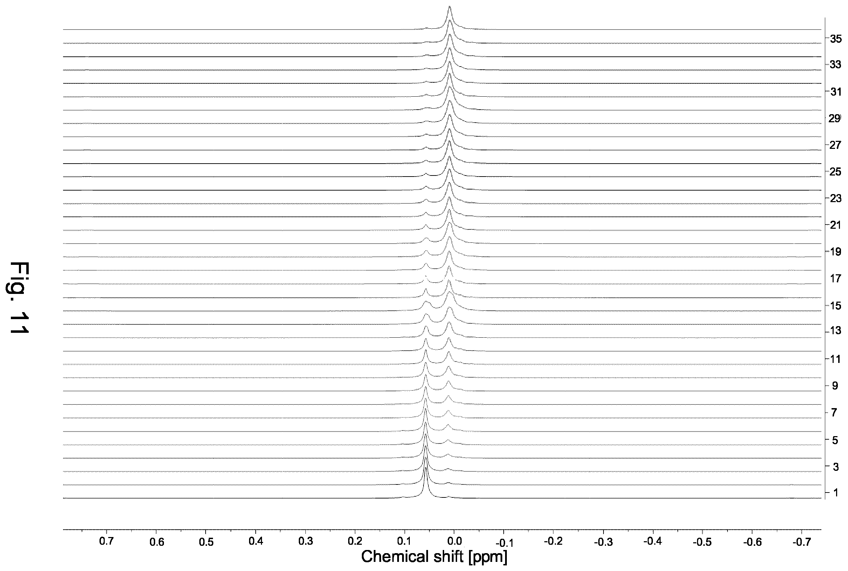

Fig. 11 is a plot showing time-series measurements of ring opening of D3 in a ¹H NMR kinetic study showing accumulation of PDMS in detriment of an alcohol as initiator.

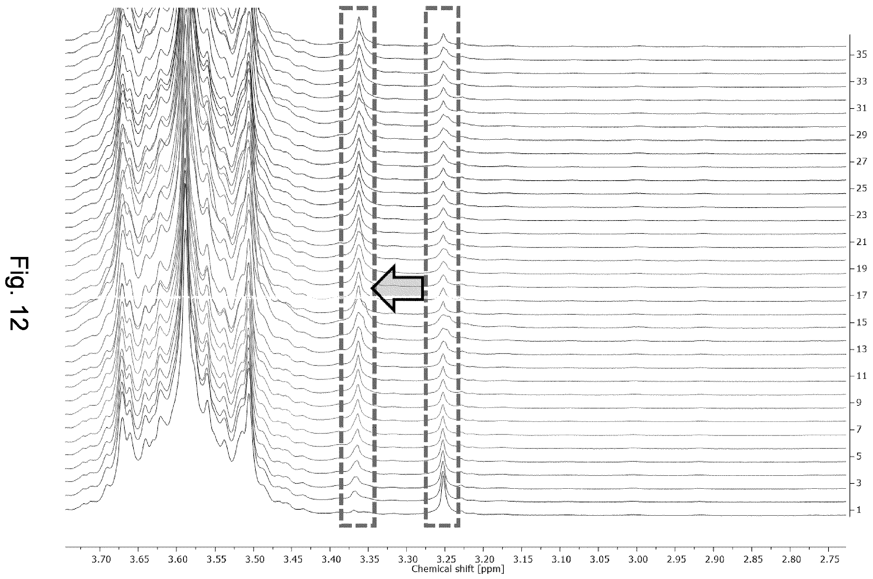

Fig. 12 represents
Fig. 13 shows self-assembled nanostructure type over time by dynamic light scattering.
Fig. 14 is a plot of UV spectrum showing decrease in absorbance over time for the self-assembly solutions of the cleavable mPEG-b-PDMS-b-PEG.
Fig. 15 is a SEC chromatogram displaying increased intensity of the mPEG750 signal due to hydrolytic cleavage of the silyl ether bond. mPEG 750 was used as reference.

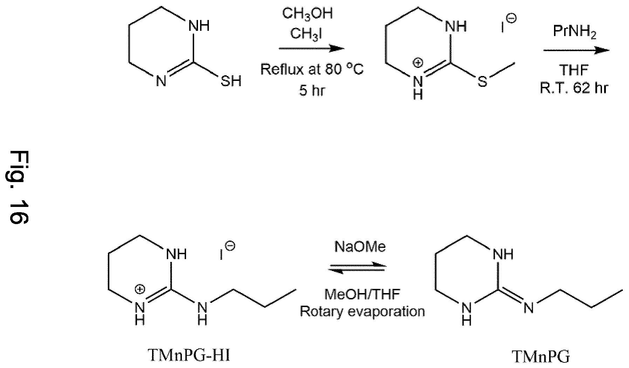

Fig. 16 represents the preparation of 1,2-trimethylene-3-propylguanidine hydroiodide, TMnPG-HI.

### DETAILED DESCRIPTION

More specifically, the invention relates to a method for making a liquid composition comprising self-assembled polymersomes, wherein said polymersomes comprise amphiphilic block copolymers of the P₁-b-P₂ type, said method comprising the step of synthesizing R-C-O-P₁-b-P₂ block copolymers comprising a silyl ether (-C-O-Si-) bond and wherein P₁ is a hydrophobic polymer and P₂ is a hydrophilic polymer and R is any atom or group of atoms, wherein said synthesis comprises ring-opening polymerization of a cyclic monomer by an initiator in the presence of a catalyst, the initiator comprising a carbon-bound hydroxyl.

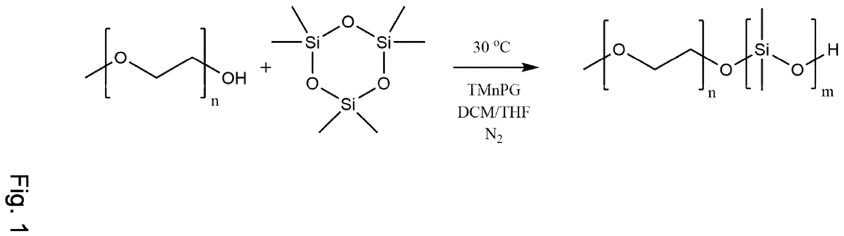

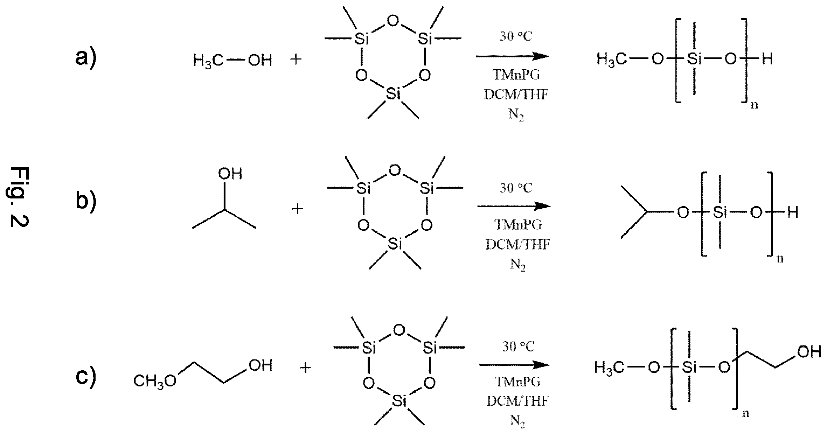

Silyl ether bonds may be generated in a number of ways, e.g., by the nucleophilic attack of an initiator comprising a hydroxyl terminal group on a cyclic siloxane monomer, such as a cyclic trisiloxane to form a polymer chain. This process is a form of ring-opening polymerization (ROP). Other forms of chain-growth polymerization are known, however, obtaining a silyl ether bond is critical to the carrying out of the invention as disclosed herein. Said reaction is carried out as described in Example 1 herein below. See also Figs. 1 & 2.

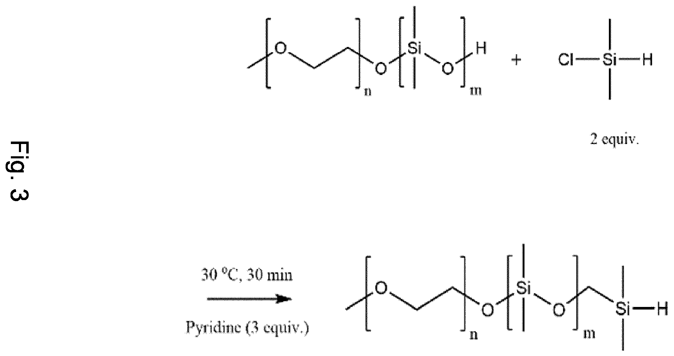

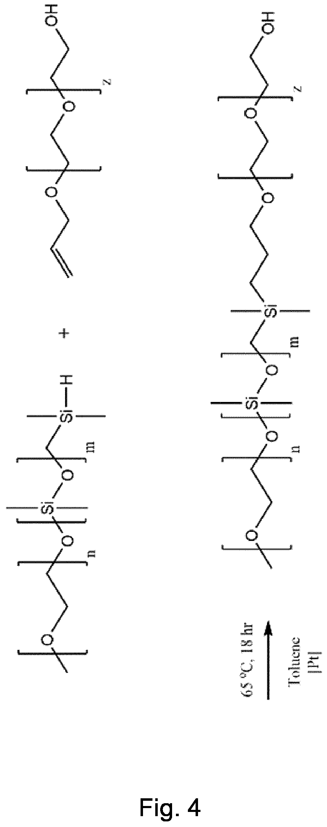

Subsequently, the obtained diblock copolymers may be endcapped with, e.g., chloro silane thereby making a -Si-H end group available for reaction with a vinyl-terminated hydrophilic polymer P₂ of choice for obtaining a R-C-O-P₁-b-P₂ polymer. See Figs. 3 & 4. Chloro silanes are of the formula Cl-Si(R₁R₂)-H, where R₁=R₂ or R₁≠R₂. Thus R-C-O-P₁-Si(R₁R₂)-H is obtained where R1=R2 or R1≠R2. One example of chlorosilane is dimethyl chlorosilane.

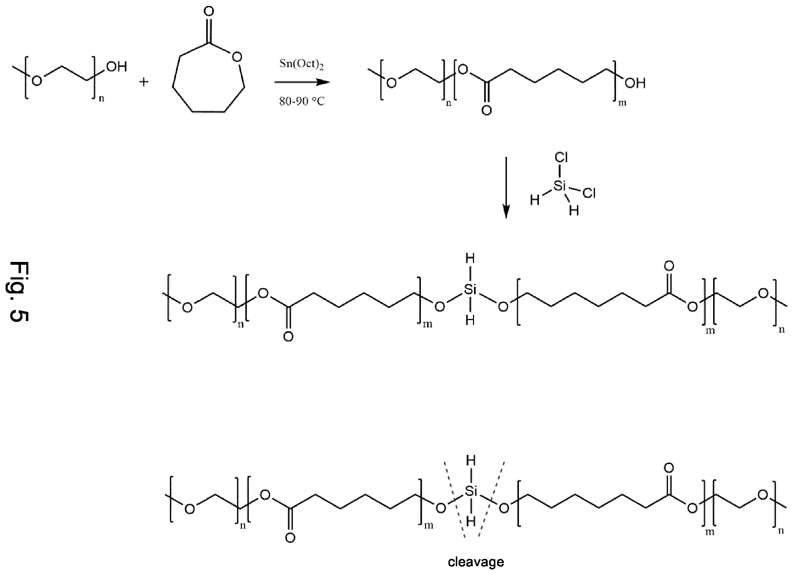

Fig. 5 depicts another method for obtaining block copolymers comprising a silyl ether bond that includes the step of reacting a chlorosilane coupling agent with poly(caprolactone)-b-P₂ copolymer, thus obtaining P₂-b-PCL-CO-Si-O-PCL-b-P₃ triblock copolymers.

Yet another method for obtaining block copolymers comprising a silyl ether bond includes the step of performing a ROP reaction of an ε-caprolactone using a mPEG as initiator for obtaining a polymer of the R-b-P₁-OH type followed by reaction with a chloro silane, such as dimethylchlorosilane. Further reaction with, e.g., a vinyl-terminated hydrophilic polymer yields a block copolymer of the R-b-P₁-C-O-Si-P₂ type comprising a silyl ether (-C-O-Si-) bond.

The invention further relates to vesicles and a method for obtaining said vesicles as disclosed herein, which vesicles comprise an amphiphilic diblock copolymer of the P₁-b-P₂ type and triblock copolymer of the R-C-O-Si-P₁-b-P₂ or R-Si-O-C-P₁-b-P₂ types wherein P₁ is a hydrophobic polymer and P₂ is a hydrophilic polymer and wherein R is any atom or group of atoms as vesicle membrane forming material and further optionally comprising a transmembrane protein.

A list of hydrophilic blocks useful for carrying out the invention according to this disclosure includes, but is not limited to poly(oxazolines); poly(ethylene glycols); and poly(methacrylates), such as poly((dimethylamino)ethyl methacrylates) and poly(2-hydroxyethyl methacrylates).

All of these are of high interest since all of these are efficient at reconstituting transmembrane proteins including AQPs. Of particular interest are poly(ethylene glycol) and poly(oxazoline) based hydrophilic blocks.

A list of hydrophobic blocks useful for carrying out the invention according to this disclosure includes, but is not limited to poly(butylene oxides); poly (butadienes) ; poly(lactones) or more narrowly poly(caprolactones); poly(lactides); poly(siloxanes) or more narrowly poly(dimethylsiloxanes); and poly(methacrylates) such as poly(methyl methacrylates) and poly(butyl methacrylates).

All of these are of high interest since all are efficient at reconstituting transmembrane proteins including AQPs. Of particular interest are poly(dimethyl siloxane) and poly(caprolactone) based hydrophobic blocks.

Hybrid systems, which are combinations of block copolymer and lipids, are also conceivable. This is possible since lipids can easily be conceived as P₂ moieties bound in the vinyl silyl reaction, i.e., the methyl silane-terminated polymer reaction with a vinyl-terminated lipid (P₂) for obtaining a block copolymer.

Thus, triblock copolymers not only of the form ABA (e.g., PEG-O-PDMS-b-PEG) are conceivable, but also of form ABC, such in case of, e.g., PEG-O-PDMS-b-PMOXA, where PMOXA is poly(2-methyloxazoline) and where PEG is released and PDMS-b-PMOXA leaves as a diblock after cleavage.

Hydrophilic blocks forming the copolymer may in some instances be end-functionalized. Examples of said functionalized hydrophilic blocks are, e.g., bis(amino alkyl) or bis(hydroxyalkyl) terminated polymers, or polymers comprising primary amines (-NH₂), carboxyls (-COOH), sulfhydryls (-SH) and carbonyls (-CHO) as end groups.

Examples of transmembrane proteins are aquaporin water channels, i.e., aquaporins and aquaglyceroporins, such as those listed in the definitions below.

In addition, the invention relates to a method of making the liquid composition as disclosed, in which a solution of an amphiphilic diblock or triblock copolymer according to the disclosure as vesicle membrane forming material is optionally mixed with a transmembrane protein.

Initiators suitable for the ROP reaction include many types of molecules, e.g., hydroxyl terminated polymers such as PEG or mPEG. Also, lower molecular weight alcohols have displayed good ring opening efficiency. Such alcohols may include, in decreasing ring opening efficiency, methanol, 2-(methoxy)ethanol, 2-(benzyloxy)ethanol and isopropanol amongst others.

The product of the ring-opening polymerization reaction is a polymer of the R-C-O-P₁ type, wherein R is a moiety contributed by the initiator species, and the method comprises the steps of
a) reacting the R-C-O-P₁ polymer with a chlorodimethyl silane for obtaining a silane-terminated R-C-O-P₁-Si-H, and
b) reacting the methyl silane-terminated polymer of step a) with a vinyl-terminated hydrophilic polymer (P₂) for obtaining a block copolymer of the R-C-O-P₁-b-P₂) type comprising a silyl ether (-C-O-Si-) bond.

Examples of cyclic siloxanes that may be efficient in forming useful PDMS polymers by ring opening polymerization include, but are not limited to trisiloxanes (D3) including 1,3,5-triphenyl-1,3,5-tri-p-tolylcyclotrisiloxane, 1,3,5-trivinyl-1,3,5-trimethylcyclotrisiloxane, hexaphenylcyclotrisiloxane and 1,3,5-triphenyltrimethylcyclotrisiloxane, tetrasiloxanes (D4), pentasiloxanes (D5) such as pentamethylcyclotrisiloxane including (3-cyanopropyl) pentamethylcyclotrisiloxane and vinylpentamethylcyclotrisiloxane, hexasiloxanes (D6) such as hexamethylcyclotrisiloxane, heptasiloxsanes (D7) and octasiloxanes (D8). Further, any Si atom in the chain can be substituted with a methyl or phenyl group or by a diphenyl group or a methl/vinyl and so forth. Higher polysiloxanes also exist with such functionalities and are considered as starting materials, such as functionalized trisiloxanes and functionalized tetrasiloxanes.

Alternatively, the product of the ring-opening polymerization reaction is a polymer of the R-b-P₁-OH type, wherein R is a moiety contributed by the initiator species, and the method comprises the steps of reacting the R-b-P₁-OH polymer with a chloro silane for obtaining a silane-terminated R-b-P₁-C-O-Si-H, and reacting the silane-terminated polymer with a vinyl-terminated hydrophilic polymer (P₂) for obtaining a block copolymer of the R-b-P₁-C-O-Si-P₂ type comprising a silyl ether (-C-O-Si-) bond. A preferred way of carrying out the invention is to use chlorodimethyl silane for obtaining a silane terminated polymer.

The liquid composition may be applied to a support membrane or an active layer of a separation membrane. As an example, the active layer may be a thin film composite (TFC) layer formed on the support membrane. A TFC membrane may be formed using alternative reaction components, e.g., as described by Zhou et al. in Journal of Membrane Science, Volume 471, 1 December 2014, Pages 381-391 "Thin-film composite membranes formed by interfacial polymerization with natural material sericin and trimesoyl chloride for nanofiltration". A highly selective active layer may also be formed on the substrate by the layer-by-layer method (see Wang et al., Membranes, 5(3): 369-384, 2015).

The filtration membrane according to the invention may be prepared by adding a liquid composition comprising said diblock and/or triblock copolymer vesicles, e.g., also comprising aquaporin water channel proteins as the transmembrane protein, during the membrane fabrication process, such as adding the liquid composition to an aqueous MPD solution when forming a TFC layer.

Producing a thin film composite (TFC) separation membrane comprising the polymersomes according to this disclosure may be achieved by applying the liquid composition to a porous support membrane. For membranes modified with a thin film composite (TFC) layer, which comprise aquaporin water channels, said method comprises the steps of:
a) obtaining an aquaporin vesicles suspension, wherein said vesicles are polymersomes comprising amphiphilic di- or triblock copolymers according to any one of the possible implementation forms of the present disclosure, such as disclosed in Examples 1 or 2 herein below,
b) preparing an aqueous solution of a di- or triamine,
c) dissolving a di- or triacyl halide in an apolar organic solvent,
d) preparing a mixture of amine and aquaporin vesicle by dissolving/mixing the vesicles preparation from step a) with the solution from step b),
e) applying the mixture from step d) onto a porous support membrane,
f) removing excess aqueous solution by, e.g., use of an air knife,
g) applying the acyl halide solution from step c) onto the membrane to allow an interfacial polymerization reaction to take place, and
h) rinsing the membrane surface with an aqueous solvent.

### Definitions and Terms

The term "coupling agent" as used herein is a molecule that reacts with the OH- end groups of two diblock copolymers to couple them, thus producing a triblock with potentially unstable silyl ether bond(s). Families of coupling agents include, but are not limited to silanes, such as dichlorosilanes as used in specific enabling embodiments disclosed herein.

The term "transmembrane protein" as used herein is a type of membrane protein spanning the entire thickness of the biological membrane to which it is permanently attached in nature. That is, in nature, transmembrane proteins span from one side of a lipidic bilayer membrane through to the other side of the membrane. Examples of transmembrane proteins are ammonia transporters, urea transporters, chloride channels, and aquaporin water channels.

The term "aquaporin water channel" as used herein includes a functional natural or synthetic aquaporin or aquaglyceroporin water channel, such as aquaporin Z (AqpZ), GIPf, SoPIP2;l, aquaporin 1 and/or aquaporin 2. Aquaporin water channels include bacterial aquaporins and eukaryotic aquaporins, such as yeast aquaporins, plant aquaporins and mammalian aquaporins, as well as related channel proteins, such as aquaglyceroporins. Examples of aquaporins and aquaglyceroporins include: Prokaryotic aquaporins such as AqpZ; mammalian aquaporins, such as Aqpl and Aqp2; plant aquaporins, such as plasma intrinsic proteins (PIP), tonoplast intrinsic proteins (TIP), nodulin intrinsic proteins (NIP) and small intrinsic proteins (SIP), e.g. SoPIP2;l, PttPIP2;5 and PtPIP2;2; yeast aquaporins, such as AQY1 and AQY2; and aquaglyceroporins, such as GlpF and Yfl054. Aquaporin water channel proteins may be prepared according to the methods as set out in Karlsson et al. (FEBS Letters 537: 68-72, 2003) or as described in Jensen et al. US 2012/0080377 (e.g. see Example 6).

In one enabling example of the separation membrane of the disclosure, the transmembrane protein may be an anion channel protein, such as a voltage-dependent anion channel, which is useful in preparation of ion exchange membranes for reverse electrodialysis, cf. Dlugolecki et al. (Journal of Membrane Science, 319 214-222, 2008).

The terms "separation membrane" as used herein includes membranes useful for separating water and, optionally, certain small size solutes including anions and cations, from other solutes, particles, colloids and macromolecules. Examples separation membranes are "filtration membranes" such as nanofiltration (NF) membranes, forward osmosis (FO) membranes and reverse osmosis (RO) membranes. One type of filtration membranes is a "thin film composite" (or TFC) membrane, often classified as nanofiltration and reverse osmosis membranes. TFC membranes are typically made by depositing a polyamide layer on top of a polyethersulfone or polysulfone porous layer on top of a non-woven or woven fabric support. The polyamide rejection layer is formed through interfacial polymerization of an aqueous solution of an amine with a solution of an acid chloride in an organic solvent. TFC membranes may be produced as described in WO 2013/043118 (Nanyang Technological University & Aquaporin A/S). Other types of filtration membranes are those formed by the layer-by-layer (LbL) deposition method, such as described in Gribova et al. (Chem. Mater., 24: 854-869, 2012) and Wang et al. (Membranes, 5(3): 369-384, 2015). For example, the self-assembled polymersome may be embedded or incorporated in the polyelectrolyte multilayer (PEM) films, as outlined in Figure 4 of Gribova et al.

"Thin-film-composite" or (TFC) membranes as used herein may be prepared using an amine reactant, preferably an aromatic amine, such as a diamine or triamine, e.g., l,3-diaminobenzene (m-Phenylenediamine, > 99%, e.g., as purchased from Sigma-Aldrich) in an aqueous solution, and an acyl halide reactant, such as a di- or triacid chloride, preferably an aromatic acyl halide, e.g., benzene- 1,3, 5 -tricarbonyl chloride (CAS No. 84270-84-8, trimesoyl chloride (TMC), 98%, e.g. as purchased from Sigma-Aldrich) dissolved in an organic solvent where said reactants combine in an interfacial condensation polymerization reaction, cf. Khorshidi et al. (2016) Scientific Reports 6, Article number: 22069, and US Patent No: 4,277,344 which describes in detail the formation of a composite membrane comprising a polyamide laminated to a porous membrane support, at the surface of the support membrane, e.g., a polyethersulfone membrane. Benzene-l,3,5-tricarbonyl chloride (trimesoyl chloride) is dissolved in a solvent, such as a C₆-Ci₂ hydrocarbon including hexane (>99.9%, Fisher Chemicals), heptane, octane, nonane, decane etc. (straight chain or branched hydrocarbons) or other low aromatic hydrocarbon solvent, e.g., Isopar^{™} G Fluid which is produced from petroleum-based raw materials treated with hydrogen in the presence of a catalyst to produce a low odour fluid the major components of which include isoalkanes. Isopar^{™} G Fluid: Chemical Name: Hydrocarbons, C₁₀-C₁₂, isoalkanes, < 2% aromatics; CAS No: 64742-48-9, chemical name: Naphtha (petroleum), hydrotreated heavy (from ExxonMobil Chemical). Alternatives to the reactant 1,3-diaminobenzene include diamines such as hexamethylenediamine etc., and alternatives to the reactant benzene-l,3,5-tricarbonyl chloride include a diacyl chloride, adipoyl chloride, cyanuric acid etc. as known in the art.

The term "diblock copolymer" as used herein means a polymer consisting of two types of monomers, A and B. The monomers are arranged such that there is a chain of each monomer, and those two chains are grafted together to form a single copolymer chain.

The term "triblock copolymer" as used herein means a polymer consisting of two or three types of monomers, A, B and/or C. The monomers are arranged such that there is a chain of each monomer, and those chains are grafted together to form a single copolymer chain, such as triblock copolymers of the form ABA or ABC.

The abbreviation Mₙ means number average molecular weight. It means the total weight of polymer divided by the number of polymer molecules. Thus, Mₙ is the molecular weight weighted according to number fractions. The abbreviation M_{w} means weight average molecular weight. The molecular weight weighted according to weight fractions. Molecular mass may be measured by gel permeation chromatography (GPC) in tetrahydrofuran. Polydispersity index defined as Mn/Mw will be determined from the elution curves obtained in GPC.

Size of the vesicles: Preferably, the vesicles of the present invention have a particle size of between about 10 nm diameter up to 200 nm diameter depending on the precise components of the vesicles and the conditions used for their formation. It will be clear to those skilled in the art that a particle size refers to a range of sizes and the number quoted herein refers to the average diameter, most commonly mean diameter of that range of particles. The vesicle compositions of the present invention comprise vesicles having mean hydrodynamic diameters of 300 nm or less, in some cases mean diameters that are less than 400 nm such as less than 50 nm.

Thickness of the vesicle membranes: Preferably, the vesicles of the present invention have a membrane thickness of between about 6 nm diameter up to 18 nm diameter depending on the precise components of the vesicles and the conditions used for their formation. It will be clear to those skilled in the art that membrane thickness refers to a range of thicknesses and the number quoted herein refers to the average diameter when referring to a solution of vesicles, most commonly mean thickness.

Examples of molar ratios of transmembrane protein to block copolymer is dependent on the transmembrane protein used, the types of copolymers used, and the desired size of the vesicle. As an example, for vesicles of amphiphilic diblock or triblock copolymer of the PEG-b-PDMS or PEG-b-PCL types-based vesicles and aquaporin water channels, the molar ratio of transmembrane protein to block copolymer may be between 1:200 to 1:2000, such as 1:400 to 1 :1500, such as 1:600 to 1:1000.

The term "self-assembled" as used herein refers to the process by which vesicles are formed through hydrophilic and hydrophobic interaction of amphiphilic substances, such as the diblock copolymers described herein having a relatively hydrophilic PEG moiety and a relatively hydrophobic PCL moiety.

The term hydrophilic as used herein relates to a polymer chain having a tendency to mix with, dissolve in, or be wetted by water. Such a substance will be relatively hydrophilic when compared to a hydrophobic polymer chain as referred to herein.

The term hydrophobic as used herein relates to a polymer chain having a tendency to repel or fail to mix with water. Such a substance will be relatively hydrophobic when compared to a hydrophilic polymer chain as referred to herein.

"Hydrodynamic diameter" as used herein represents the hydrodynamic size of nanoparticles in aqueous media measured by dynamic light scattering (DLS) defined as the size of a hypothetical hard sphere that diffuses in the same fashion as that of the particle being measured.

Forward osmosis (FO) is an osmotic process that uses a selectively permeable membrane to effect separation of water from dissolved solutes. The driving force for this separation is an osmotic pressure gradient between a solution of high concentration, herein referred to as the draw and a solution of lower concentration, referred to as the feed. The osmotic pressure gradient induces a net flow of water through the membrane into the draw, thus effectively concentrating the feed. The draw solution can consist of a single or multiple simple salts or can be a substance specifically tailored for forward osmosis applications. The feed solution can be a dilute product stream, such as a beverage, a waste stream or seawater, cf. IFOA, http://forwardosmosis.biz/education/what-is-forward-osmosis/

Most of the applications of FO, thus, fall into one of three broad categories: Product concentration, waste concentration or production of clean water as a bi-product of the concentration process. The term "PAFO" when used herein describes a pressure assisted forward osmosis process. The term "PRO" when used herein describes pressure retarded osmosis which is useful in the generation of osmotic power. Membranes of the present invention are useful in all types of forward osmosis processes and may be specifically adapted for each FO type.

The term "reverse osmosis" (RO) is used herein refers to when an applied feed water pressure on a selectively permeable membrane is used to overcome osmotic pressure. Reverse osmosis typically removes many types of dissolved and suspended substances from feed water, including bacteria, and is used in both industrial processes and in the production of potable water. During the RO process, the solute is retained on the pressurized side of the membrane and the pure solvent, the permeate, passes to the other side. Selectivity specifies that the membrane does not allow larger molecules or ions through its pores (holes), while allowing smaller components of the solution (such as solvent molecules) to pass freely. Low pressure reverse osmosis (LPRO) membranes typically operate at a feed water pressure of from about < 5 bar and up to a maximum operating pressure of about 25 bar 15 specific flux LMH/bar. LPRO performed at the lower feed pressure ranges, e.g., 2 to 5 bar is sometimes designated ultra-low pressure reverse osmosis. LPRO membranes known in the art have typical operating limits for feed water temperature of about 45 °C, feed water pH in the range of 2 to 11, and chemical cleaning in the range of pH 1 to 12.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality.

The present invention is further illustrated with reference to the following non-limiting examples:

### EXAMPLES

### Example 1.

Ring-opening polymerization of D3 by using polyethylene glycol monomethyl ether, mPEG as an initiator.

In a general procedure (Table 1, Entry 3) hexamethylcyclotrisiloxane (1.5 g, 6.7 mmol) was added to a dry round-bottom flask. The flask was then evacuated and backfilled with N2 3 times. Then, DCM (1.07 mL) was injected, followed by addition of THF (0.48 mL) and mPEG solution in THF (1.14 mL, 0.5 g/mL) and the resulting solution was placed at 30°C. In addition, a solution of TMnPG in DCM (1.074 mL, 0.01 g/mL) was injected into the flask and the reaction was continued to run for 17 hr under constant stirring. Finally, the mixture was passed through a short silica column by using THF as the eluent. The solvent was then removed at reduced pressure, obtaining mPEG-b-PDMS diblock as opaque viscous liquid. Yield (1.57 g, 76 %).

All the mixtures and solvents were kept over activated 3Å molecular sieves prior to use.

**Table 1: Summary of mPEG-b-PDMS diblock synthesis**

| Entry | Volume ratio of DCM/THF | [D₃]₀/[mPEG]₀/[TMnPG]₀ | Mₙ PEG [g mol⁻¹] | Reaction time [hr] | Mₙ PEG [g mol⁻¹] | Targeted DP | Acquired DP |
|---|---|---|---|---|---|---|---|
| | | | ¹H NMR | | ¹H NMR | | |
| 1 | 57/43 | 9/1/0.09 | 656' | 24 | - | - | - |
| 2 | *57*/*43* | 9/1/0.9 | 656' | 24 | - | - | - |
| 3 | 57/43 | 7/1/0.07 | 656' | 17 | 2341 | 21 | 22 |
| 4 | 57/43 | 7.9/1/0.079 | 656' | 17 | 2596 | 24 | 26 |
| 5 | 57/43 | 10.5/1/0.105 | 885' | 17 | 4489 | 31 | 49 |
| 6 | 57/43 | 15.17/1/0.1517 | 814' | 17 | 5747 | 46 | 61 |

| | | | | | | | |
|---|---|---|---|---|---|---|---|
| ^{a}poly(ethylene glycol)methyl ether, ^{b}vinyl terminated poly(ethylene glycol). In all cases non-stabilized HPLC grade THF was used | | | | | | | |

### Example 2.

Kinetic data on preparation of mPEG-b-PDMS diblock copolymers using SEC.

In order to evaluate the efficiency of the catalyst, kinetic studies were performed on the ROP reaction of D3 with mPEG(656) as initiating specie and TMnPG as a catalyst. Two sets of parameters were tested (Table 1, Entry 1 and 2). The progress of the reaction was followed by SEC measurements. It was noticed that for the lower catalyst amount the reaction reached close to full conversion only after 24 hr. In contrast, the reaction with 10 times higher catalyst amount exhibited a similar profile after 3.5 hr. After 24 hr side-reactions were observed from the broadening of the polymer peak with a slight increase in molecular weight and polydispersity (Ð). In addition, an increase in RI signal intensity of the mPEG specie (at 18.3 min elution time), indicating slight cleavage of mPEG over time.

Synthetic progress of mPEG-b-PDMS (9/1/0.09) and (9/1/0.9) was followed over time. mPEG(656) was used as an initiator. Mn = 4803 g mol-1, Ð = 1.15 for mPEG-b-PDMS (9/1/0.09) after 24 hr. Mn = 5253 g mol-1, Ð = 1.22 for mPEG-b-PDMS (9/1/0.9) after 24 hr.

In the Cryo-TEM images (not shown) it is visible that there is no vesicle formation and rather phase-separated droplet-like structures were observed. None of them having a bilayer, bilayer being the main characteristic of polymersomes. Over time, phase-separated oily droplet like structures were also visible by the eye in the polymersome solution. The same observation was made with mPEG(709)-b-PDMS(1632) (Table 1, Entry 3).

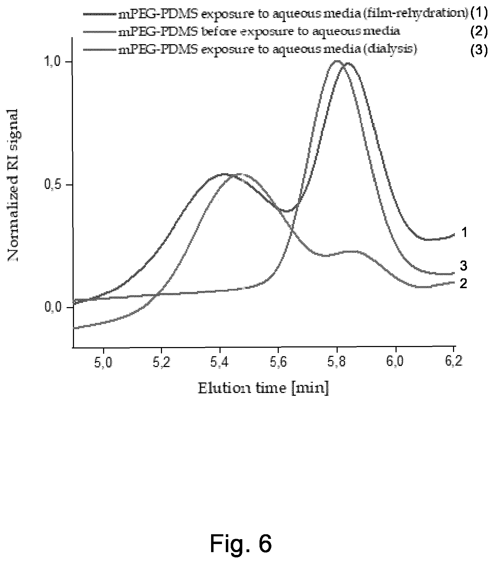

This behavior might be attributed to the unstable silyl ether bond connecting the two blocks. Further investigation of this effect was carried by performing the same film-rehydration method in PBS buffer and in a dialysis set-up, see Fig. 6. For the dialysis 1.0 g of the material was dissolved in THF (10 mL). The dialysis was performed against DI water (1.5 L). The dialysis media was exchanged 2 times (every 24 hr). As for the film-rehydration method, the polymersome solution was left to shake for 1 day. The water in both cases was removed by performing freeze-drying procedure. The extent of degradation of the polymer was assessed by using SEC. The results revealed that the prolonged contact of the block copolymer to the aqueous media led to higher degree of degradation of the block copolymer material. See Fig. 6.

### Example 3.

### Ring-opening kinetics of D3 by using mPEG as initiator. Time-series ¹H NMR measurements

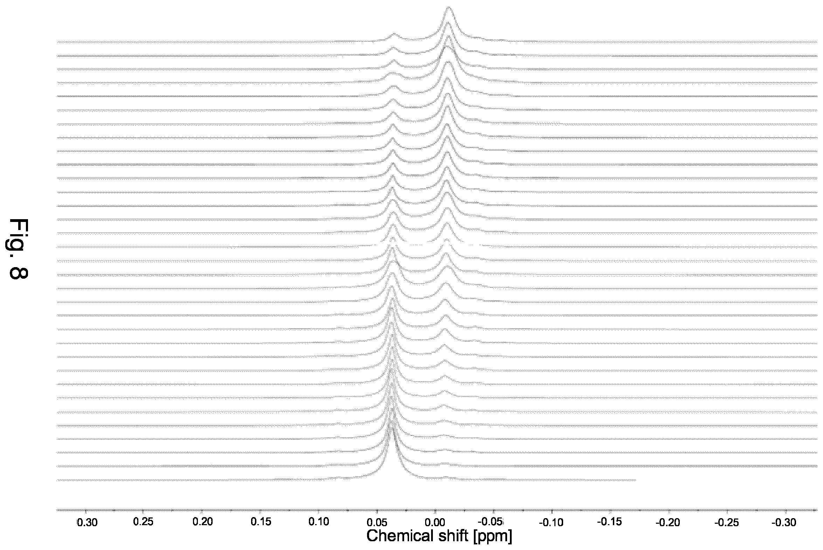

In a dry vial D3 (199 mg, 0.89 mmol) was dissolved in DCM (0.14 mL, dry). Then, mPEG (74.3 mg, 0.113 mmol, 656 g mol-1) was dissolved in THF (0.22 mL, dry). Finally, TMnPG (8 mg, 0.057 mmol) solution in DCM (0.14 mL, dry) was prepared. Mixtures were shortly purged with N₂ and transferred to a dried NMR tube. The time-series measurements of ¹H NMR were performed on a 80 MHz SpinSolve Benchtop NMR instrument at 26 °C. Spectra were collected every 30 min for 17 hr. The resultant spectra is given in Fig. 8. The progress of the D3 consumption was followed by the peak at 0.04 ppm, while the growth of the PDMS chain at -0.01 ppm. After 17 hr the reaction reached 84 % conversion.

### Example 4.

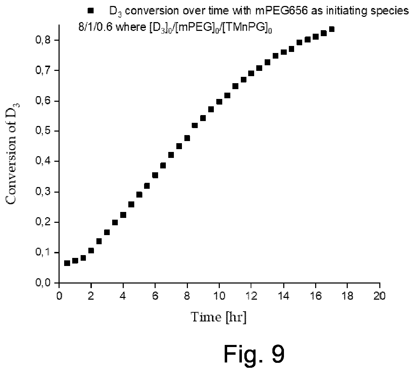

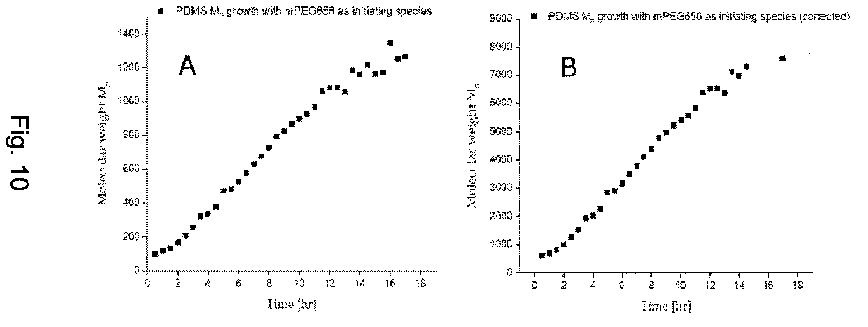

As a result of ¹H NMR time-series measurements, integrals of the D3 and growing PDMS chain were compared . From Fig. 9 it can be seen that the reaction proceeds slowly for the first 2 hours after which it follows a linear growth and reaches a plateau after 13-14 hr. The solution was then extracted from the NMR tube and passed through a short silica column with THF as an eluent in order to verify the correct molecular weight and account for the unreacted mPEG. The results are given in Figure 10, presenting both non-purified (A) and purified (B) materials. After 17 hr the expected Mn was around 1400 g mol⁻¹ for the non-purified material compared to the 7610 g mol⁻¹ of the one passed through silica, indicating an initiating efficiency of 18.4 % for mPEG. A correction factor was applied, presenting the real molecular weights. Figures 9 and 10 were further assisted for targeting more precise molecular weights of the PDMS. For this reason, the reaction time or D3 amount can be readjusted by following the same reaction temperature.

### Example 5.

Ring-opening polymerization of D3 by using small molecular weight alcohols as initiator and subsequent end-capping with chloro dimethylsilane.

In a general procedure (Table 2, Entry 1) D3 (1.5 g, 6.7 mmol) was added to a dried flask, evacuated and backfilled with N2 3 times. Under the nitrogen atmosphere, DCM (1.6 mL, dry) was injected, followed by addition of THF (1.6 mL, dry) and MeOH (0.03 mL). Then, the temperature was raised to 30 °C and TMnPG solution in DCM (0.54 mL, 0.1 g/mL) was injected. The reaction was left to proceed for 15 hr under constant stirring. Afterwards, pyridine (0.24 mL, dry) and chlorodimethylsilane (0.17 mL, 1.5 mmol) were added under an inert atmosphere. The reaction was left to run for 30 min. Gas evolution (HCl) and subsequent formation of white precipitant (pyridinium chloride) was observed. The mixture was then diluted with THF, filtered and the solvent was evaporated. The residue was diluted with heptane (10-20 mL). The mixture was then filtered again and transferred to a separation funnel where it was diluted with MeCN (10-20 mL) and washed 2-3 times. The top layer (heptane) was then collected as the main fraction and the solvent was evaporated. The flask was filled with N₂ and stored in a freezer (-25 °C) upon further use. Final material was obtained as a clear liquid. Yield (0.9 g, 63 %).

**Table 2: Conditions for PDMS synthesis from different low molecular weight alcohols as part of the 1H time-series measurements.**

| Entry | Volume ratio of DCM/THF | [D₃]₀/[Alcohol]₀/[TMnPG]₀ | Alcohol | Reaction time [hr] |
|---|---|---|---|---|
| 1 | 57/43 | 9/1/0.5 | Methanol | 17 |
| 2 | 57/43 | 9/1/0.5 | 2-(Methoxy)ethanol | 17 |
| 3 | 57/43 | 9/1/0.5 | 2-(Benzyloxy)ethanol | 17 |
| 4 | 57/43 | 9/1/0.5 | Isopropanol | 17 |

**Table 3: Data on the synthesized PDMS materials by using low molecular weight alcohols as initiating species. ^{a}Degree of polymerization (DP) and initiation efficiency were evaluated from the data 1H NMR measurements of the final (purified) material.**

| Entry | Alcohol | Mₙ [g mol⁻¹] ¹H NMR | Targeted DP^{a} | Acquired DP^{a} | Mₙ [g mol⁻¹] SEC | Ð | Initiation efficiency [%]^{a} |
|---|---|---|---|---|---|---|---|
| 1 | Methanol | 1905 | 27 | 24 | 1991 | 1.08 | 89.0 |
| 2 | 2-(Methoxy)ethanol | 3337 | 27 | 45 | 2071 | 1.17 | 60.0 |
| 3 | 2-(Benzyloxy)ethanol | 3847 | 27 | 52 | 2449 | 1.21 | 52.0 |
| 4 | Isopropanol | 9015 | 27 | 122 | 5881 | 1.16 | 22.1 |

Methanol, 2-(methoxy)ethanol, 2-(benzyloxy)ethanol and isopropanol were tested in order to evaluate their efficiency as ROP initiators for D3 (see Table 3). It was noticed that MeOH yielded a PDMS with desirable DP. In comparison, 2-(methoxy)ethanol and 2-(benzyloxy)ethanol resulted in roughly twice the molecular weight targeted. Finally, initiation from isopropanol yielded a polymer that was almost five times larger than targeted. This could be explained by the presence of more sterically hindered secondary alcohol of IPOH, compared to primary alcohols such as MeOH or 2-(methoxy)ethanol or 2-(benzyloxy)ethanol. It seems that sterical hindrance and chain length of the initiating alcohol species play a key role in the reaction efficiency of ROP of D3. Therefore, it is here concluded that short chain primary alcohols are the most efficient initiating species for the preparation of hydroxy terminated PDMS materials from cyclosiloxanes.

### Example 6.

### Preparation of mPEG-b-PDMS-b-PEG triblock.

D3 (0.75 g, 3.37 mmol) was added to a dry round-bottom flask. The flask was vacuumed out and backfilled with N2 3 times. Afterwards, under N2 DCM (1.074 mL, dry) was injected together with an mPEG (0.56 g, 1.52 mmol, 656 g mol⁻¹) solution in THF (1.621 mL). Reaction was set to run at 30 °C under constant stirring. Then, TMnPG (75 mg, 0.53 mmol) in DCM (1.074 mL, dry) was injected. The reaction was left to run for 17.5 hr. Directly to the reaction mixture, pyridine (0.194 mL, 2.40 mmol) and chlorodimethylsilane (0.22 mL, 1.98 mmol) were injected. The reaction was carried for 30 min, obtaining a hydride terminated mPEG-b-PDMS diblock. The mixture was then filtered through a PTFE filter (0.45 µm) in order to remove the pyridinium chloride salt after which it was passed through a short silica column with THF as an eluent. The solvent was removed by rotary evaporation at reduced pressure. Subsequently, the material was left for further drying in vacuo overnight, obtaining viscous opaque liquid (0.56 g, Yield: 42.8 %). Mn = 1930 g mol-1 (¹H NMR).

Hydride terminated mPEG-b-PDMS diblock (0.56 g, 0.29 mmol) and vinyl terminated PEG (0.260 g, 0.32 mmol, 814 g mol⁻¹, 10 % excess) were charged to a dry round-bottom flask. The flask was then vacuumed out and backfilled with N2 3 times. Then, toluene (5 mL, dry) was injected and the temperature of the mixture was raised to 65 °C. Finally, 10 µL of Pt catalyst (2.0-2.1 wt % Pt in xylene) was introduced. The reaction was left to run for 18 hr under constant stirring. The crude mixture was directly applied on a silica column with THF as an eluent. The solvent was removed by rotary evaporation under reduced pressure, obtaining clear viscous liquid (0.250 g, yield: 30.5 %). Total yield: 13 %. Mn = 6151 g mol⁻¹ (¹H NMR), Mn = 6689 g mol⁻¹ (SEC), Ð = 1.29.

### Example 7.

### Hydrolytic study of mPEG-b-PDMS-b-PEG triblock.

PEG(1916)-b-PDMS(4235) (30 mg) was dissolved in THF (40 µL) in a small vial. The solution was slowly added to MiliQ water (2 mL), which was prior, passed through a 0.45 µm Nylon filter. The suspension was left to stir at 150 rpm and 30 °C throughout the study. The samples of 100 µL were collected and measured in NanoCuvette^{™} on a UV spectrophotometer. MiliQ water was used as the reference. After each measurements the samples were collected in small vials and frozen at -30 °C upon further usage. Table 5 gives the overview of the hydrolytic study.

**Table 4: Data on the hydrolytic study of the cleavable triblock.**

| Entry | Time [hr] | Mean particle diameter [nm] | Concentration [Vol. %] | UV absorbance [at 800 nm] |
|---|---|---|---|---|
| 1 | 0.58 | 2428 | 0.034 | 0.313 |
| 2 | 5.17 | 2415 | 0.028 | 0.307 |
| 3 | 22.25 | 1939 | 0.013 | 0.23 |
| 4 | 29.25 | 1887 | 0.011 | 0.223 |
| 5 | 50.2 | 1731 | 0.010 | 0.217 |
| 6 | 216 | 109 | 0.010 | 0.208 |

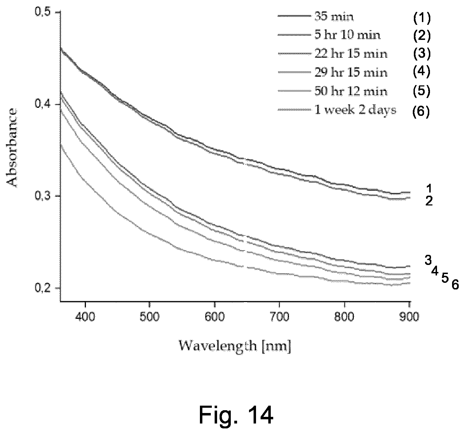

Turning to Fig. 14, it is observable that during the first 5 hours some non-sedimenting microphases were visible. Upon further stirring, they disappeared and the suspension became less turbid as visible over time. Together with the decrease in absorbance, significant changes in the mean particle diameter were observed. After 50.2 hours the change in the size of self-assemblies was 700 nm with majority of worm-like structures and their aggregates present. In comparison, after 1 week and 2 days the dominating species were polymersomes with a difference of 2320 nm compared to the initial point. This can be explained by the cleavage of the poly(ethylene glycol) methyl ether, which changes the hydrophilic fraction (f = 31.1 % before and 22.1 % after cleavage) of the block copolymer chain. This leads to the change in critical packing parameter and thus curvature of the self-assembly, driving the block copolymer chains to reassemble from worm-like structures to vesicles.

### Example 8.

### Evaluation of the mPEG cleavage by SEC

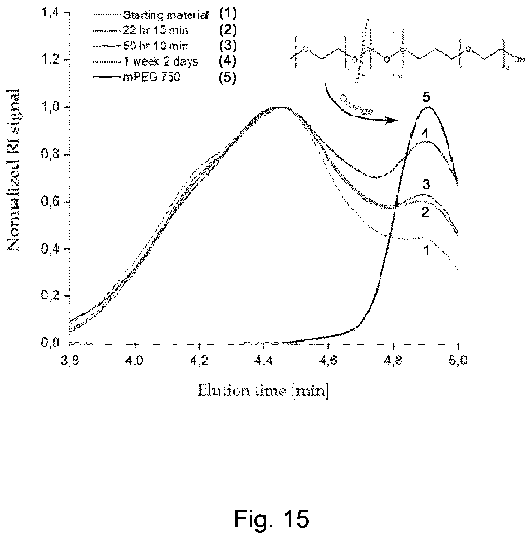

Frozen samples that were initially used to conduct UV measurements were unthawed and transferred to larger vials (20 mL). The samples were then submerged to liquid N2 for a few minutes and immediately transferred to the desiccator. Water was then removed by performing a freeze-drying step at reduced pressure. The dry material was further investigated in SEC. The results are displayed in a Fig. 15.

After exposing the hydrolytically unstable triblock to aqueous media for 1 week and 2 days the sample was taken for Cryo-TEM imaging. The sample was frozen on a small copper lacey grid under liquid ethane and subsequently measured on Cryo-TEM instrument. Images revealed homogeneously sized vesicles of roughly 100 nm in diameter. The average bilayer thickness was found to be 8.2 ± 1.46 nm. Most of the vesicles have some inhomogeneity in the bilayer thickness, which might arise from incomplete hydrolysis of the material and thus existence of both diblock and triblock species.

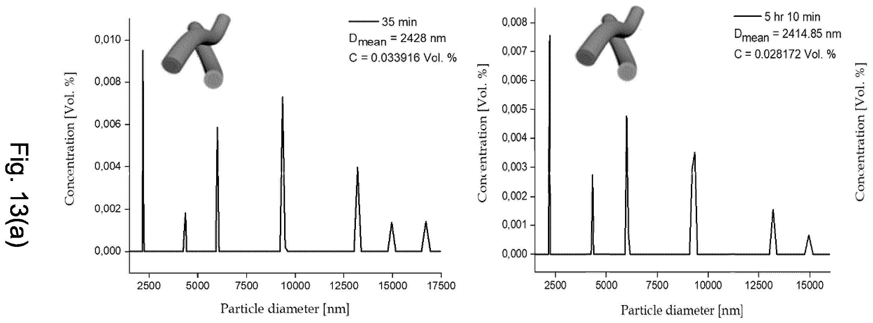

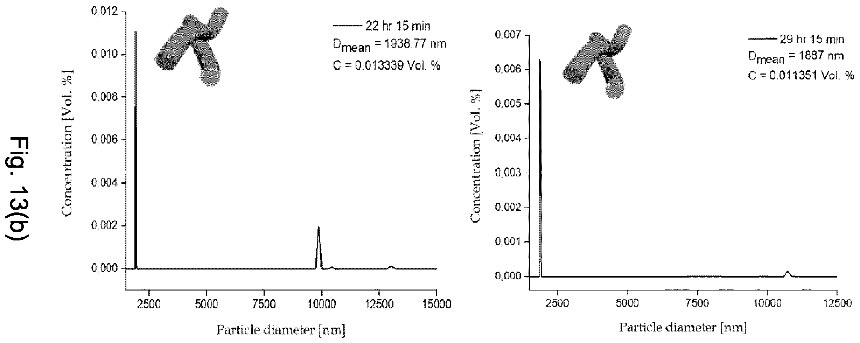

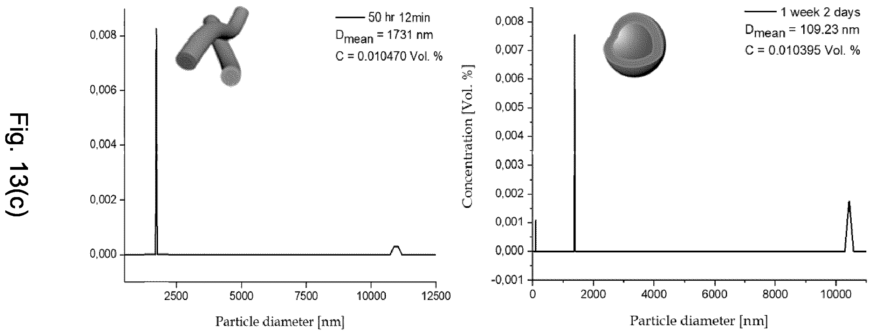

Fig. 13 shows results from NanoCuvette^{™} displaying differences in mean particle diameter over time. It is visible that the dominating species after 50 hr are worm-like structures, while after 1 week and 2 days vesicles are mostly present.

### Example 9.

### Synthesis of PEG-b-PDMS-b-PEG reference triblock (stable, un-cleavable)

Vinyl terminated PEG (1.44 g, 1.75 mmol, 825 g mol-1) was added to a round bottom flask (100 mL). The flask was then shortly purged with N2. Then, DMS-HM15 (3.13 mL, 0.72 mmol, 4146 g mol-1) was injected together with toluene (15 mL, dry). The reaction mixture was heated to 65 °C after which 8 µL of Pt catalyst (2.0-2.1 wt % Pt in xylene) was added. The reaction mixture was left to stir overnight. After 17.5 hr the reaction mixture was cooled down to R.T. and activated carbon (prewashed in toluene) was added. The mixture was left to stir overnight. Afterwards, the mixture was passed through a cellulose filter. Then, a slurry of zelite was prepared in THF, which was applied on a cellulose filter and washed with copious amount of THF. Then, the toluene mixture was passed through the zelite, washed with THF a few times and solvent evaporated at reduced pressure, obtaining highly viscous opaque liquid. Yield: 86 %, 3.80 g, ¹H NMR: Mn = 7489 g mol⁻¹, SEC: Mn = 8887 g mol⁻¹, Ð = 1.17.

### SEC of PEG-b-PDMS-b-PEG reference triblock (stable, un-cleavable)

The prepared material of a stable, reference triblock was exposed to the SEC measurements. It was noticed that the hydrolytically unstable triblock had a slightly different SEC profile, indicating that there might be a mixture of diblock and triblock species in the starting material. Both the stable and cleavable variants seem to have a very similar amount of unreacted PEG species.

### Hydrolytic study of the non-cleavable reference PEG-b-PDMS-b-PEG triblock

PEG-b-PDMS-b-PEG (30 mg) was dissolved in THF (40 µL) in a small vial. The solution was slowly added to MiliQ water (2 mL), which was prior, passed through a 0.45 µm Nylon filter. The suspension was left to stir at 150 rpm and 30 °C throughout the study. The samples of 100 µL were collected and measured in NanoCuvette^{™} on a UV spectrophotometer. MiliQ water was used as the reference. Table 5 gives the overview of the hydrolytic study.

**Table 5: Data on the hydrolytic study of the non-cleavable reference triblock.**

| Entry | Time [hr] | Mean particle diameter [nm] | Concentration [Vol. %] | UV absorbance [at 800 nm] |
|---|---|---|---|---|
| 1 | 4.75 | 2190 | 0.019 | 0.296 |
| 2 | 25.17 | 2397 | 0.032 | 0.350 |
| 3 | 50.75 | 2557 | 0.035 | 0.386 |
| 4 | 120 | 2695 | 0.036 | 0.384 |

NanoCuvette^{™} displaying differences in mean particle diameter showed that the diameter of self-assemblies increases over time, indicating an aggregating behavior of the non-cleavable reference triblock (data not shown). It is, thus, evident that the non-cleavable reference triblock is forming aggregates over time, which is supported by an increase in absorbance and thus turbidity of the aqueous solutions of self-assemblies (data not shown). This behavior has the opposite effect to that of a cleavable triblock variant, where upon cleavage of mPEG structures slowly rearranged from aggregates or worm-like structures to polymersomes.

### Additional methods:

### 1. Vesicle formation from mPEG-b-PDMS diblock copolymer

### 1.1 Film rehydration.

mPEG-b-PDMS (50 mg) was dissolved in chloroform (5 mL) in a 50 mL beaker. Chloroform was then evaporated, obtaining a dry film. The film was rehydrated with PBS buffer (5 mL, pH = 7.5) by slow addition and left on a shaking table overnight (140-150 rpm).

mPEG-b-PDMS (50 mg) was dissolved in THF (5 mL) and 50 mL of PBS buffer was slowly introduced to the mixture (5 mL hr-1) by using a syringe pump. The THF and water mixture was reduced to about 50 % of original volume by using rotary evaporation.

### 1.2 Dialysis assisted vesicle formation.

mPEG-b-PDMS (50 mg) was dissolved in THF (5 mL) and placed in a dialysis bag (1k MW cut-off). Dialysis was performed against 1 L of DI water.

¹H NMR time-series measurements for the evaluation of reaction kinetics both for mPEG and low molecular weight alcohols were performed on 80 MHz Spinsolve Benchtop NMR spectrometer with an RMX module add-on (Magritek). Measurements were performed in DCM/THF (non-deuterated) solvent mixtures at 26 °C. Spectra were collected every 15 or 30 min with shimming (every fifth measurements) and 2 s loops.

Purified PEG-b-PDMS diblocks and triblocks were evaluated on Bruker Avance III spectrometer operating at 400.13 MHz. The spectrometer is equipped with a 5 mm Prodigy CryoProbe (Bruker). Measurements were performed at 25 °C in CDCl3.

UV measurements were performed on UV-1900i Shimadzu UV-Vis Spectrophotometer. Spectra were collected in a range of 190 to 1100 nm with 1.0 nm data intervals under absorbance mode. Samples were measured in NanoCuvette^{™} S (cphnano), which have an integrated photonic nanocrystal for registering light scattering. UV measurements are first performed with a reference (fluid material - water, MiliQ) and subsequently with the sample (particle material - polydimethylsiloxane). The UV measurements are uploaded into SpectroWorks^{™} cloud system after which the collected absorbance data is computed into light scattering data.

In some cases size-exclusion chromatography (SEC) was performed on a chromatographic system, which consists of a Viscotek VE 2001 Gel permeation chromatography (GPC) solvent/sample module connected to a Viscotek TriSEC Model 302 Triple Detector Array (refractive index, light scattering, viscometer). The column set consisted of a PL Guard and two PL gel mixed D columns (Polymer Laboratories, UK) connected in series. Tetrahydrofuran (THF) (Merck, Germany) was used as a mobile phase. The samples were measured at a flow rate of 1 mL·min-1. Molar masses were determined using a calibration based on narrow polystyrene (PS) standards (PSS, Mainz, Germany). Samples were analyzed by using OmniSEC 5.10 software.

In most cases size-exclusion chromatography (SEC) of the PDMS and PEG-b-PDMS based diblocks and triblocks was carried out on a chromatographic system consisting of a Waters Acquity solvent delivery module and column oven, connected to a Waters PDA TS detector and Malvern Omnisec Reveal triple detector array (RI, light scattering, viscometer). The columns were a 150 x 4.6 mm Acquity APC^{™} XT 450 2.5 µm, a 150 x 4.6 mm Acquity APC^{™} XT 200 2.5 µm and a 150 x 4.6 mm Acquity APC^{™} XT 45 1.7 µm organic size exclusion chromatography columns connected in series. All samples were analyzed using a flow rate of 0.7 mL min-1 in stabilized tetrahydrofuran at 35 °C.

Samples for the Cyogenic transmission electron microscopy (Cryo-TEM) were vitrified on a glow-discharged lacey formvar film enforced by silicon monoxide coating and supported by a copper mesh grid (Ted Pella Inc., USA). The samples were vitrified in liquid ethane with the use of Vitrobot Mark IV (FEI, USA) and subsequently mounted in a Gatan cryoholder (FEI, USA). The images were acquired in cryogenic mode using a Tecnai G2 20 TWIN 200 kV TEM equipped with a FEI High-Sensitive 4k × 4k Eagle camera.

## Claims

1. A method for producing self-assembled polymersomes in a aqueous solution, wherein said polymersomes comprise amphiphilic diblock copolymers of the P₁-b-P₂ type, said method comprising the step of synthesizing R-C-O-P₁-b-P₂ block copolymers comprising a silyl ether (-C-O-Si-) bond and wherein P₁ is a hydrophobic polymer and P₂ is a hydrophilic polymer and R is any atom or group of atoms, wherein said synthesis comprises ring-opening polymerization of a cyclic siloxane by an initiator in the presence of a catalyst the initiator comprising a carbon-bound hydroxyl.

2. The method according to claim 1, wherein the product of the ring-opening polymerization reaction is a polymer of the R-C-O-P₁ type, the method further comprising the steps of
a) reacting the R-C-O-P₁ polymer with a chloro silane for obtaining a silane-terminated R-C-OP₁-Si(R₁R₂)-H wherein R₁=R₂ or R₁≠R₂, and
b) reacting the silane-terminated polymer of step a) with a vinyl-terminated hydrophilic polymer (P₂) for obtaining a block copolymer of the R-CO-P₁-b-P₂ type comprising a silyl ether (-C-O-Si-) bond.

3. The method according to claim 1, wherein the product of the ring-opening polymerization reaction is a polymer of the R-P₁-OH type, the method further comprising the steps of
c) reacting the R-P₁-OH polymer with a chloro silane for obtaining a silane-terminated R-P₁-C-O-Si(R₁R₂)-, and
d) reacting the methyl silane-terminated polymer of step a) with a vinyl-terminated hydrophilic polymer (P₂) for obtaining a block copolymer of the R-P₁-C-O-Si-P₂ type comprising a silyl ether (-C-O-Si-) bond.

4. The method according to any one preceding claim wherein the initiator has a Mn comprised between approximately 200 Da and 5 kDa, as measured in the specification.

5. The method according to any one preceding claim, wherein the initiator comprises a hydroxy-terminated polymer or an alcohol.

6. The method according to any one preceding claim, wherein P₁ is poly(dimethylsiloxane) (PDMS) and the amphiphilic diblock copolymer is of the poly(dimethylsiloxane)-b-P₂ (H-PDMS-b-P₂) type, said method comprising the step of synthesizing R-C-O-(Si(CH₃)₂-O)ₙ-P₂ (R-C-O-PDMS-b-P₂) block copolymers comprising a silyl ether (-C-O-Si-) bond.

7. The method according to any one preceding claim, wherein a crosslinking reagent is further added to the reaction.

8. A polymersome comprising block copolymers of the H-SiP₁-b-P₂ type wherein P₁ is a hydrophobic polymer and P₂ is a hydrophilic polymer.

9. The polymersome according to claim 8 further comprising block copolymers of the R-C-O-Si-P₁-b-P₂ type comprising a silyl ether (-C-O-Si-) bond and wherein R is any atom or group of atoms.

10. The polymersome according claim 9, wherein the block copolymer comprising a silyl ether bond is a triblock copolymer.

11. The polymersome according to any one of claims 8 to 10, wherein P₂ and/or R comprise a PEG.

12. The polymersome according to any one of claims 8 to 11, wherein P₁ comprises poly(dimethylsiloxane) (PDMS) or polycaprolactone (PCL).

13. The polymersome according to claim 12, wherein the triblock copolymer comprising a silyl ether bond is of the PEG-O-PDMS-b-PEG, MeO-PEG-O-PDMS-b-PEG or PEG-b-PCL-C-O-Si-PCL-b-PEG types.

14. The polymersome according to any one of claims 8 to 13, wherein the block copolymer further comprises a functional end group allowing crosslinking.

15. The polymersome according to claim 14 wherein the functional end group is selected from the group comprising primary amines (-NH2), carboxyls (-COOH), sulfhydryls (-SH) and carbonyls (-CHO).

## Patentansprüche

1. Verfahren zum Herstellen von selbstorganisierten Polymersomen in einer wässrigen Lösung, wobei die Polymersomen amphiphile Diblockcopolymere vom Typ P₁-b-P₂ umfassen, wobei das Verfahren den Schritt des Synthetisierens von R-C-O-P₁-b-P₂-Blockcopolymeren umfasst, die eine Silylether(-C-O-Si-)-Bindung umfassen, und wobei P₁ ein hydrophobes Polymer ist und P₂ ein hydrophiles Polymer ist und R ein beliebiges Atom oder eine beliebige Gruppe von Atomen ist, wobei die Synthese eine ringöffnende Polymerisation eines cyclischen Siloxans durch einen Initiator in Gegenwart eines Katalysators umfasst, wobei der Initiator ein kohlenstoffgebundenes Hydroxyl umfasst.

2. Verfahren nach Anspruch 1, wobei das Produkt der ringöffnenden Polymerisationsreaktion ein Polymer vom Typ R-C-O-P₁ ist, wobei das Verfahren ferner die folgenden Schritte umfasst:
a) Umsetzen des R-C-O-P₁-Polymers mit einem Chlorsilan zum Erhalten eines silanterminierten R-C-O-P₁-Si(R₁R₂)-H, wobei R₁=R₂ oder R₁≠R₂ ist, und
b) Umsetzen des silanterminierten Polymers aus Schritt a) mit einem vinylterminierten hydrophilen Polymer (P₂) zum Erhalten eines Blockcopolymers vom Typ R-C-O-P₁-b-P₂, das eine Silylether(-C-O-Si-)-Bindung umfasst.

3. Verfahren nach Anspruch 1, wobei das Produkt der ringöffnenden Polymerisationsreaktion ein Polymer vom Typ R-P₁-OH ist, wobei das Verfahren ferner die folgenden Schritte umfasst:
c) Umsetzen des R-P₁-OH-Polymers mit einem Chlorsilan zum Erhalten eines silanterminierten R-P₁-C-O-Si(R₁R₂)- und
d) Umsetzen des methylsilanterminierten Polymers aus Schritt a) mit einem vinylterminierten hydrophilen Polymer (P₂) zum Erhalten eines Blockcopolymers vom Typ R-P₁-C-O-Si-P₂, das eine Silylether(-C-O-Si-)-Bindung umfasst.

4. Verfahren nach einem der vorhergehenden Ansprüche, wobei der Initiator eine Mn zwischen ungefähr 200 Da und 5 kDa aufweist, gemessen gemäß der Beschreibung.

5. Verfahren nach einem der vorhergehenden Ansprüche, wobei der Initiator ein hydroxyterminiertes Polymer oder einen Alkohol umfasst.

6. Verfahren nach einem der vorhergehenden Ansprüche, wobei P₁ Poly(dimethylsiloxan) (PDMS) ist und das amphiphile Diblockcopolymer vom Typ Poly(dimethylsiloxan)-b-P₂(H-PDMS-b-P₂) ist, wobei das Verfahren den Schritt des Synthetisierens von R-C-O-(Si(CH₃)₂-O)ₙ-P₂(R-C-O-PDMS-b-P₂)-Blockcopolymeren umfasst, die eine Silylether(-C-O-Si-)-Bindung umfassen.

7. Verfahren nach einem der vorhergehenden Ansprüche, wobei der Reaktion ferner ein Vernetzungsmittel zugesetzt wird.

8. Polymersom, umfassend Blockcopolymere vom Typ H-Si-P₁-b-P₂, wobei P₁ ein hydrophobes Polymer ist und P₂ ein hydrophiles Polymer ist.

9. Polymersom nach Anspruch 8, ferner Blockcopolymere vom Typ R-C-O-Si-P₁-b-P₂ umfassend, die eine Silylether(-C-O-Si-)-Bindung umfassen, und wobei R ein beliebiges Atom oder eine beliebige Gruppe von Atomen ist.

10. Polymersom nach Anspruch 9, wobei das Blockcopolymer, das eine Silyletherbindung umfasst, ein Triblockcopolymer ist.

11. Polymersom nach einem der Ansprüche 8 bis 10, wobei P₂ und/oder R ein PEG umfassen.

12. Polymersom nach einem der Ansprüche 8 bis 11, wobei P₁ Poly(dimethylsiloxan) (PDMS) oder Polycaprolacton (PCL) umfasst.

13. Polymersom nach Anspruch 12, wobei das Triblockcopolymer, das eine Silyletherbindung umfasst, vom Typ PEG-O-PDMS-b-PEG, MeO-PEG-O-PDMS-b-PEG oder PEG-b-PCL-C-O-Si-PCL-b-PEG ist.

14. Polymersom nach einem der Ansprüche 8 bis 13, wobei das Blockcopolymer ferner eine funktionelle Endgruppe umfasst, die eine Vernetzung ermöglicht.

15. Polymersom nach Anspruch 14, wobei die funktionelle Endgruppe aus der Gruppe ausgewählt ist, die primäre Amine (-NH2), Carboxyle (-COOH), Sulfhydryle (-SH) und Carbonyle (-CHO) umfasst.

## Revendications

1. Procédé de production de polymersomes auto-assemblés dans une solution aqueuse, dans lequel lesdits polymersomes comprennent des copolymères diséquencés amphiphiles du type P₁-b-P₂, ledit procédé comprenant l'étape de synthèse de copolymères séquencés R-C-O-P₁-b-P₂ comprenant une liaison éther de silyle (-C-O-Si-) et dans lequel P₁ est un polymère hydrophobe, P₂ est un polymère hydrophile et R est un atome quelconque ou un groupe d'atomes quelconque, dans lequel ladite synthèse comprend la polymérisation par ouverture de cycle d'un siloxane cyclique par un amorceur en présence d'un catalyseur, l'amorceur comprenant un groupe hydroxyle lié au carbone.

2. Procédé selon la revendication 1, dans lequel le produit de la réaction de polymérisation par ouverture de cycle est un polymère du type R-C-O-P₁, le procédé comprenant en outre les étapes de
a) réaction du polymère R-C-O-P₁ avec un chlorosilane pour obtenir un polymère à terminaison silane de formule R-C-O-P₁-Si(R₁R₂)-H, où R₁ = R₂ ou R₁ ≠ R₂, et
b) réaction du polymère à terminaison silane de l'étape a) avec un polymère (P₂) hydrophile à terminaison vinyle pour obtenir un copolymère séquencé du type R-C-O-P₁-b-P₂ comprenant une liaison éther de silyle (-C-O-Si-).

3. Procédé selon la revendication 1, dans lequel le produit de la réaction de polymérisation par ouverture de cycle est un polymère du type R-P₁-OH, le procédé comprenant en outre les étapes de
c) réaction du polymère R-P₁-OH avec un chlorosilane pour obtenir un polymère à terminaison silane de formule R-C-O-P₁-Si(R₁R₂)-, et
d) réaction du polymère à terminaison méthylsilane de l'étape a) avec un polymère (P₂) hydrophile à terminaison vinyle pour obtenir un copolymère séquencé du type R-P₁-C-O-Si-P₂ comprenant une liaison éther de silyle (-C-O-Si-).

4. Procédé selon une quelconque revendication précédente, dans lequel l'amorceur présente un Mn compris entre approximativement 200 Da et 5 kDa, tel que mesuré dans la spécification.

5. Procédé selon une quelconque revendication précédente, dans lequel l'amorceur comprend un polymère à terminaison hydroxy ou un alcool.

6. Procédé selon une quelconque revendication précédente, dans lequel P₁ est le poly(diméthylsiloxane) (PDMS) et le copolymère diséquencé amphiphile est du type poly(diméthylsiloxane)-b-P₂ (H-PDMS-b-P₂), ledit procédé comprenant l'étape de synthèse des copolymères séquencés R-C-O-(Si(CH₃)₂-O)ₙP₂ (R-C-O-PDMS-b-P₂) comprenant une liaison éther de silyle (-C-O-Si-).

7. Procédé selon une quelconque revendication précédente, dans lequel un réactif de réticulation est en outre ajouté à la réaction.

8. Polymersome comprenant des copolymères séquencés du type H-Si-P₁-b-P₂, dans lequel P₁ est un polymère hydrophobe et P₂ est un polymère hydrophile.

9. Polymersome selon la revendication 8, comprenant en outre des copolymères séquencés du type R-C-O-Si-P₁-b-P₂ comprenant une liaison éther de silyle (-C-O-Si-) et dans lequel R est un atome quelconque ou un groupe d'atomes quelconque.

10. Polymersome selon la revendication 9, dans lequel le copolymère séquencé comprenant une liaison éther de silyle est un copolymère triséquencé.

11. Polymersome selon l'une quelconque des revendications 8 à 10, dans lequel P₂ et/ou R comprennent un PEG.

12. Polymersome selon l'une quelconque des revendications 8 à 11, dans lequel P₁ comprend du poly(diméthylsiloxane) (PDMS) ou de la polycaprolactone (PCL).

13. Polymersome selon la revendication 12, dans lequel le copolymère triséquencé comprenant une liaison éther de silyle est du type PEG-O-PDMS-b-PEG, MeO-PEG-O-PDMS-b-PEG ou PEG-b-PCL-C-O-Si-PCL-b-PEG.

14. Polymersome selon l'une quelconque des revendications 8 à 13, dans lequel le copolymère séquencé comprend en outre un groupe terminal fonctionnel permettant la réticulation.

15. Polymersome selon la revendication 14, dans lequel le groupe terminal fonctionnel est choisi dans le groupe comprenant les amines primaires (-NH₂), les groupes carboxyle (-COOH), les groupes sulfhydryle (-SH) et les groupes carbonyle (-CHO).
